# EUROPÄISCHE PATENTANMELDUNG

(11) **EP 1 785 794 A2**
(43) Veröffentlichungstag der Anmeldung: **16.05.2007**
(21) Anmeldenummer: 06120096.0
(22) Anmeldetag: 05.09.2006
(51) Int. Cl.: G05B 19/409, B41F 33/00

(54) **Anzeige von Vorbedingungen bei der Eingabe von Bedienbefehlen**

(30) Priorität: 29.09.2005 DE 102005046686
(71) Anmelder: Heidelberger Druckmaschinen Aktiengesellschaft, 69115 Heidelberg (DE)
(72) Erfinder: Marek, Frank, 76669, Bad Schönborn (DE)

(57) **Zusammenfassung**

Die Erfindung betrifft eine Vorrichtung zur Bedienung von Bedruckstoff verarbeitenden Maschinen (9) mit wenigstens einem Steuerungsrechner (4, 8) und einem Bedienelement (2). Die Erfindung zeichnet sich dadurch aus, dass bei Eingabe von Bedienbefehlen über das Bedienelement (2) der Betriebszustand der Maschine (9) ermittelbar ist und dass der eingegebene Bedienbefehl in Abhängigkeit von Vorbedingungen ausgeführt wird, die vom Betriebszustand der Maschine (9) abhängen

## Beschreibung

Die vorliegende Erfindung betrifft eine Vorrichtung zur Bedienung von bedruckstoffverarbeitenden Maschinen mit wenigstens einem Steuerungsrechner und einem Bedienelement.

Der Betrieb von Druckmaschinen und anderen Maschinen in der graphischen Industrie zur Herstellung von Druckprodukten erfordert vom Bediener die Eingabe einer Vielzahl von Parametern und Bedienbefehlen, um einen Auftrag abzuarbeiten. Aus diesem Grund sind inzwischen einige Verfahren bekannt, welche dem Bediener die Aufgabe erleichtern, die richtigen Eingaben zu machen. So werden inzwischen Druckaufträge und deren Parameter in elektronischer Form entweder über Speicherkarten den Druckmaschinen mitgeteilt oder über Netzwerke in einer computervernetzten Druckerei übertragen. Die übertragenen Druckaufträge enthalten Merkmale, aus welchen die Steuerung der den Auftrag abarbeitenden Maschine die nötigen Einstellungen für die Maschine errechnet und so weit wie möglich auch vornimmt. Eine solche Vorgehensweise ist aus der DE 10 2004 033 056 A1 bekannt, die eine weitgehend automatisierte Bedienung zum Betreiben einer Maschine in der graphischen Industrie offenbart. Beispielhaft für eine solche Maschine wird in der Offenbarung einer Druckmaschine behandelt, die einen Rechner aufweist, in dem zumindest ein Druckauftrag abspeicherbar ist. Wenn der Druckauftrag im Maschinenrechner abgespeichert ist, werden die Eigenschaften des abgespeicherten Druckauftrags ermittelt, so dass die Steuerungseinrichtung der Druckmaschine entsprechende Einstellungen vornehmen kann und gegebenenfalls weitere notwendige Daten zur Bearbeitung des Druckauftrags aus den vorhandenen Daten berechnen kann. Dabei nimmt der Steuerungsrechner der Druckmaschine alle Einstellungen an der Druckmaschine vor, die er selbsttätig anhand der abgespeicherten Daten oder hinterlegter Kriterien vornehmen kann. Es kommt jedoch auch bei dieser auch als "Bedienungsagent" bezeichneten Technik vor, dass mehrere gleichwertige Bedienschritte oder Eingaben vorgenommen werden können, so dass der Steuerungsrechner die gewünschten Schritte nicht selbsttätig vornehmen kann. In diesem Fall wird an das Bedienpersonal eine Abfrage gerichtet, so dass das Bedienpersonal die nötigen Parameter oder die gewünschten Bedienbefehle selbst auswählen kann. Die Anwendung der genannten Technik ist jedoch nur bei vollautomatisierten Maschinen sinnvoll, da ansonsten zu viele Abfragen an das Bedienpersonal vom Steuerungsrechner vorgenommen werden müssten.

Bei Druckmaschinen, die relativ viele manuelle Eingriffe in den Steuerungsablauf erfordern, ist die Anwendung der Bedienagententechnik nicht sinnvoll möglich. Jedoch ist es auch bei diesen Druckmaschinen so, dass bestimmte Bedienbefehle von der Druckmaschine nur abgearbeitet werden können, wenn bestimmte Vorraussetzungen dafür vorliegen. Falls diese Vorraussetzungen nicht gegeben sind, so kann das Bedienkommando von der Druckmaschine nicht ausgeführt werden. In diesem Fall wird auf der Bedienoberfläche der Druckmaschine meist eine Fehlermeldung angezeigt werden, so dass dem Bedienpersonal signalisiert wird, dass der gerade eingegebene Bedienbefehl nicht ausgeführt konnte. Eine solche Vorgehensweise hat jedoch den Nachteil, dass das Bedienpersonal nur erfährt, dass ein Bedienfehler vorliegt, ihm aber nicht weiter geholfen wird, wie man diesen Bedienfehler hätte vermeiden oder korrigieren können.

Es ist daher Aufgabe der vorliegenden Erfindung, eine Vorrichtung zur Bedienung von bedruckstoffverarbeitenden Maschinen zu schaffen, welche dem Bedienpersonal bei fehlgeschlagenen Bedienbefehlen die Möglichkeit eröffnet, die Gründe für die fehlgeschlagene Bedienung herauszufinden und gegebenenfalls notwendige Korrekturen vorzunehmen.

Die vorliegende Aufgabe wird erfindungsgemäß durch Patentanspruch 1 gelöst. Weitere vorteilhafte Ausgestaltungen der Erfindung sind den Zeichnungen und den abhängigen Patentansprüchen zu entnehmen.

Gemäß Patentanspruch 1 weist die zu steuernde bedruckstoffverarbeitende Maschine wenigstens einen Steuerungsrechner und ein Bedienelement auf, mit welchen Bedienbefehle oder Parameter an den Steuerungsrechner der Maschine übermittelt werden können. Ein solches Bedienelement kann z. B. ein Touchscreen, also ein Computerbildschirm mit berührungssensitiver Bedienoberfläche sein. Über dieses Bedienelement können dann Bedienbefehle an die Steuerung der Maschine übertragen werden. Wenn das Bedienpersonal einen bestimmten Bedienbefehl über den Touchscreen eingegeben hat, so kann es vorkommen, dass dieser Befehl fehlschlägt, da bestimmte Vorbedingungen zur Ausführung des eingegebenen Bedienbefehls abhängig vom aktuellen Zustand der Maschine nicht erfüllt sind. Bei Maschinen nach dem Stand der Technik erscheint in diesem Fall eine Fehlermeldung, so dass das Bedienpersonal informiert ist, dass die Bedienung fehlgeschlagen ist. Die erfindungsgemäße Vorrichtung begnügt sich jedoch nicht mit einer Fehlermeldung, sondern ermittelt selbsttätig den aktuellen Betriebszustand de Maschine, so dass ein Bedienbefehl, für den bestimmte Vorraussetzungen nicht erfüllt sind, gar nicht erst angenommen werden muss. Dies hat den Vorteil, dass eine Fehlbedienung der Maschine vermieden wird, da fehlerhafte Bedienbefehle nicht zur Ausführung kommen. Es werden nur solche Bedienbefehle ausgeführt, für die alle notwendigen Vorbedingungen zum Zeitpunkt der Eingabe des Bedienbefehls erfüllt sind. Bei Maschinen nach dem Stand der Technik würde zunächst der Bedienbefehl ausgeführt werden, wobei dann beim Auftreten von Fehlern in Folge nicht erfüllter Vorbedingungen eine entsprechende Fehlermeldung ausgegeben würde. Dies kann jedoch im Extremfall dazu führen, dass Schäden an der Maschine auftreten, wenn z. B. Lackförderpumpen an der Maschine heiß laufen, weil im Lackversorgungsgefäß nicht ordnungsgemäß Lack nachgefüllt wurde. Gemäß der vorliegenden Erfindung würde jedoch zunächst der Zustand des Lackversorgungsgeräts ermittelt, wobei erfasst würde, dass nicht genügend Lack vorhanden ist. In diesem Fall würde die Pumpe des Lackversorgungsgeräts gar nicht erst eingeschaltet werden und somit der Bedienungsbefehl nicht ausgeführt werden. Stattdessen könnte ein entsprechender Hinweis "Lackversorgungsgerät nicht betriebsbereit" ausgegeben werden.

In einer ersten vorteilhaften Ausgestaltung der Erfindung ist vorgesehen, dass der Bedienbefehl nicht ausführbar ist, wenn die dazu notwendigen Vorbedingungen durch den Betriebszustand der Maschinen bedingt nicht gegeben sind, und das die nicht erfolgte Durchführung des Bedienbefehls einer Bedienperson signalisierbar ist. Nachdem der Bedienbefehl nicht ausgeführt würde, da bestimmte notwendige Vorbedingungen nicht erfüllt waren, wird dem Bedienpersonal das Nichterfolgen der Durchführung des Bedienbefehls auf der Bedienoberfläche der zu steuernden Maschine angezeigt. Auf diese Art und Weise wird das Bedienpersonal unterrichtet, dass der soeben eingegebene Bedienbefehl nicht durchgeführt wurde. Im Unterschied zum Stand der Technik erfährt das Bedienpersonal, dass der Bedienbefehl nicht durchgeführt würde und nicht, dass der Bedienbefehl fehlgeschlagen ist auf Grund fehlender Vorbedingungen der Maschine.

In einer weiteren Ausgestaltung der Erfindung ist vorgesehen, dass bei Nichtausführung eines Bedienbefehls die nicht erfüllten Vorbedingungen dem Bedienpersonal übermittelbar sind. Um den Grund für das Nichterfolgen der Durchführung des Bedienbefehls herauszufinden, ist es für das Bedienpersonal von großer Wichtigkeit zu erfahren, warum der Bedienbefehl nicht ausgeführt würde. Wenn nun erfindungsgemäß die nicht erfüllten Vorbedingungen dem Bedienpersonal übermittelt werden, so kann das Bedienpersonal gezielt die zur Erfüllung der Vorbedingung notwendigen Schritte ergreifen, so dass die Vorbedingungen dann erfüllt sind. Nach Erfüllung der Vorbedingungen wird dann auch der bisher nicht durchgeführte Bedienbefehl von der Maschine akzeptiert und umgesetzt. Um das Bedienpersonal nicht unnötig zu verwirren, ist es dabei wichtig, dass nicht alle Vorbedingungen angeführt werden, sondern nur diejenigen Vorbedingungen, die gerade nicht erfüllt waren. Dies erleichtert das Auffinden des Grunds für das Nichterfolgen der Ausführung des Bedienbefehls erheblich und erleichtert zudem dem Bedienpersonal das Verständnis für die Nichtausführung des Bedienbefehls.

Des Weiteren kann vorgesehen sein, dass die nicht erfüllten Vorbedingungen auf einer Bedienoberfläche anzeigbar sind. Eine solche Bedienoberfläche stellt z. B. der Bildschirm an einem Bedienpult für eine Druckmaschine dar. Neben den sonstigen Maschineneinstellungen werden z. B. in einem bestimmten Bereich der Bedienoberfläche auf dem Bildschirm die nicht erfüllten Vorbedingungen angezeigt. Auf diese Art und Weise sind die nicht erfüllten Vorbedingungen dem Bedienpersonal visuell leicht zu vermitteln.

Alternativ oder zusätzlich kann außerdem vorgesehen sein, dass die Ausgabe der nicht erfüllten Vorbedingungen als Sprachausgabe erfolgt. Falls sich das Bedienpersonal nicht in der Nähe des Steuerstands der Druckmaschine aufhält und damit den Bedienungsbildschirm nicht einsehen kann, ist es von großem Vorteil, wenn die nicht erfüllten Vorbedingungen als Sprachausgabe ausgegeben werden. Dies kann über an der Maschine angebrachte Lautsprecher erfolgen oder auch einen Kopfhörer, den das Bedienpersonal trägt. Auf diese Art und Weise können die nicht erfüllten Vorbedingungen dem Bedienpersonal auch dann übermittelt werden, wenn es sich in einem Bereich einer Druckmaschine aufhält, von dem aus die Bedienoberfläche nicht einsehbar ist.

Vorteilhafter Weise ist außerdem vorgesehen, dass die Übermittlung der nicht erfüllten Vorbedingungen wahlweise ein- oder ausschaltbar ist. Die Anzeige der nicht erfüllten Vorbedingungen soll vor allen Dingen dem unerfahrenen Bedienpersonal dabei helfen, den Grund für die Nichtausführung eines Bedienbefehls möglichst schnell zu finden. Falls die Druckmaschine jedoch von Personal bedient wird, welches über eine jahrelange Erfahrung im Bereich der Bedienung von Druckmaschinen verfügt, so könnte die ständige Anzeige der nicht erfüllten Vorbedingungen auch als lästig empfunden werden. Aus diesem Grund ist es möglich, wenn gewünscht, die Übermittlung der nicht erfüllten Vorbedingungen z. B. mittels eines Bedienelements auf der Bedienoberfläche ein- oder auszuschalten.

Des Weiteren ist vorgesehen, dass von einer Bedienperson über das Bedienelement eingegebene Bedienbefehle vom Steuerungsrechner aufgezeichnet und in einer Datei abgespeichert werden. Auf diese Art und Weise können sämtliche Bedieneingaben einer bestimmten Bedienperson in einer Art Historie permanent aufgezeichnet und bei Gelegenheit auch wieder abgerufen werden. Auch dies hilft als Unterstützung, zur Rekonstruktion von nicht durchgeführten Bedienbefehlen. Denn es kommt oft vor, dass das Bedienpersonal der Meinung ist, einen Bedienvorgang genau so eingeleitet zu haben, wie es ihn schon dutzende Male zuvor getan hat, um dann auf Grund der Historie überrascht feststellen zu müssen, dass diesmal doch ein Bedienschritt vergessen wurde, der in der Vergangenheit immer zuvor vorgenommen wurde. Auf diese Art und Weise können ungewohnte Abweichungen von gewohnten Bedienschemata schnell herausgefunden werden. Dabei ist es besonders vorteilhaft, dass neben der Aufzeichnung der Bedienbefehle bei fehlgeschlagenen Bedieneingaben die nicht erfüllten Vorbedingungen aufgezeichnet werden. Auf diese Art und Weise wird die Historie weiter komplettiert, da nun neben den aufgezeichneten Bedienbefehlen aus der Vergangenheit auch gleichzeitig die dazu gehörigen nicht erfüllten Vorbedingungen angezeigt werden können. Auch dies hilft es dem Bedienpersonal dabei, durch einen Vergleich nachzuvollziehen, warum der Bedienbefehl fehlgeschlagen ist, da entsprechend die Analogie zu den fehlgeschlagenen Bedienbefehlen und den damals nicht erfüllten Vorbedingungen vom Bedienpersonal gezogen werden kann.

Besonders vorteilhafter Weise ist außerdem vorgesehen, dass bei fehlgeschlagenen Bedienbefehlen einer Bedienperson an Hand der nicht erfüllten Vorbedingungen Hinweise zur Bedienunterstützung gegeben werden. Um den Bedienbefehl doch noch ausführen zu können, müssen die angezeigten nicht erfüllten Vorbedingungen entsprechend erfüllt werden. Ist z. B. eine Vorbedingung für die Inbetriebnahme der Druckmaschine, dass die Lackversorgung eingeschaltet ist, so kann es unter Umständen nicht ausreichen, dem Bedienpersonal die Einschaltung der Lackversorgung zu empfehlen, da es eventuell mehrere Gründe für den Ausfall der Lackversorgung gibt. Auf diese Art und Weise kann dem Bedienpersonal eine Reihe von Möglichkeiten angezeigt werden, jeweils nach der höchsten Wahrscheinlichkeit priorisiert, welche Bedienvorgänge im Lackversorgungsgerät wahrscheinlich vorzunehmen sind, um dieses wieder in Betrieb zu setzen. Dies kann z. B. zunächst das einfache Einschalten der Lackversorgungspumpe sein, wobei in einem nächsten Schritt, wenn die Lackversorgungspumpe ausgefallen ist, z. B. weitere Schritte zur Nachverfolgung von Fehlern erfolgen können. So kann in einem zweiten Schritt empfohlen werden, die Stromversorgung des Lackversorgungsgeräts zu überprüfen.

Es ist außerdem möglich, dass mittels des Bedienelements Bedienbefehle eingebbar sind und dass vor einer etwaigen Ausführung der Bedienbefehle zunächst zu erfüllende Vorbedingungen abfragbar und der Bedienperson übermittelbar sind. In diesem Fall wird vom Steuerungsrechner der Maschine der Bedienbefehl zunächst entgegengenommen aber noch nicht ausgeführt, wenn dies auf Grund fehlender erfüllter Vorbedingungen nicht möglich ist. Stattdessen werden die noch nicht erfüllten Vorbedingungen angezeigt, so dass die Bedienperson zunächst diese Vorbedingungen erfüllen kann. Es ist auch möglich, dass der Bedienbefehl noch nicht an den Steuerungsrechner der Maschine weitergegeben wird, sondern in einer Art Trainings-/Tutorial-Funktion erst einmal simuliert wird, und die bei der Simulation nicht erfüllten Vorbedingungen angezeigt werden. Dies minimiert weiter das Risiko einer Fehlbedienung der zu steuernden Maschine.

In einer besonders vorteilhaften Ausgestaltung der Erfindung ist vorgesehen, dass Bedienelemente, deren Eingaben durch nicht erfüllte Vorbedingungen nicht ausführbar sind, vor der Erfüllung der nötigen Vorbedingung gesperrt sind. Auf diese Art und Weise ist eine Fehlbedienung der zu steuernden Maschine ausgeschlossen, da diejenigen Bedienelemente, deren Betätigung auf Grund nicht erfüllter Vorbedingungen an der Maschine eventuell einen Schaden verursachen könnten, funktionslos sind und somit vom Bedienpersonal erst gar nicht betätigt werden können. Alternativ oder zusätzlich kann vorgesehen sein, dass die gesperrten Bedienelemente durch eine Sperrfarbe markiert sind. Neben der Sperrung der entsprechenden Bedienelemente kann durch die Sperrfarbe auch optisch signalisiert werden, dass diese Bedienelemente auf Grund fehlender erfüllter Vorbedingungen derzeit funktionslos sind. Falls keine tatsächliche Sperrung der entsprechenden Bedienelemente erfolgt, so wird durch die Sperrfarbe zumindest optisch signalisiert, dass bei der Bedienung dieser entsprechenden Bedienelemente Vorsicht angebracht ist.

Es kann des Weiteren vorgesehen sein, dass bei Erfüllung der notwendigen Vorbedingungen das gesperrte Bedienelement freigeben wird. Sobald das Bedienpersonal die angezeigten nicht erfüllten Vorbedingungen erfüllt hat, wird die Sperrung der entsprechenden Bedienelemente freigegeben, so dass nun der gewünschte Bedienbefehl eingegeben werden kann und die Maschine den gewünschten Bedienschritt vornimmt.
Entsprechend dazu kann alternativ oder zusätzlich vorgesehen sein, dass zur Freigabe eines gesperrten Bedienelements die farbliche Darstellung des zuvor gesperrten Bedienelements verändert wird. Um die Freigabe eines zuvor gesperrten Bedienelements auch optisch zu signalisieren, wird bei Freigabe des zuvor gesperrten Bedienelements die farbliche Darstellung geändert. Wenn z. B. gesperrte Bedienelemente zunächst in der Signalfarbe Rot markiert sind, können freigegebene Bedienelemente z. B. in der Farbe Grün dargestellt werden. Dies erleichtert dem Bediener das Auffinden von freigegeben Bedienelementen.

Die vorliegende Erfindung lässt sich besonders gut mit Hilfe einer grafischen Benutzeroberfläche auf einem Touchscreen eines Computermonitors realisieren. In diesem Fall dient die Oberfläche des Touchscreens zum einen als Bedienoberfläche, die die entsprechenden nicht erfüllten Vorbedingungen anzeigt, und zum anderen auch zur Anzeige der freigegebenen oder gesperrten Bedienelemente, deren Berühren durch das Bedienpersonal bei Freigabe dann den entsprechenden Bedienbefehl an den Steuerungsrechner der angeschlossenen Maschine übermittelt. Neben dem Einsatz bei Druckmaschinen und sonstigen Maschinen in der grafischen Industrie kann die vorliegende Erfindung selbstverständlich auch bei anderen Maschinen oder Geräten angewendet werden. Bei der Steuerung von Druckmaschinen sind die Vorteile besonders eklatant, da die Bedienung von Druckmaschinen eine besonders hohe Anzahl von Voreinstellungen und Bedieneingaben erfordert, da der Druckvorgang ein komplexer Prozess mit zahlreichen Eingaben ist. Auf Grund dessen ist die vorliegende Erfindung zur Steuerung von Druckmaschinen geradezu prädestiniert.

Die vorliegende Erfindung wird nachfolgend anhand zweier Figuren näher beschrieben erläutert. Es zeigen:
Fig. 1: Ein Ausschnitt einer Bogenrotationsdruckmaschine mit angeschlossenem Steuerstand und
Fig. 2: ein Ablaufdiagramm bei Nutzung der erfindungsgemäßen Vorrichtung.

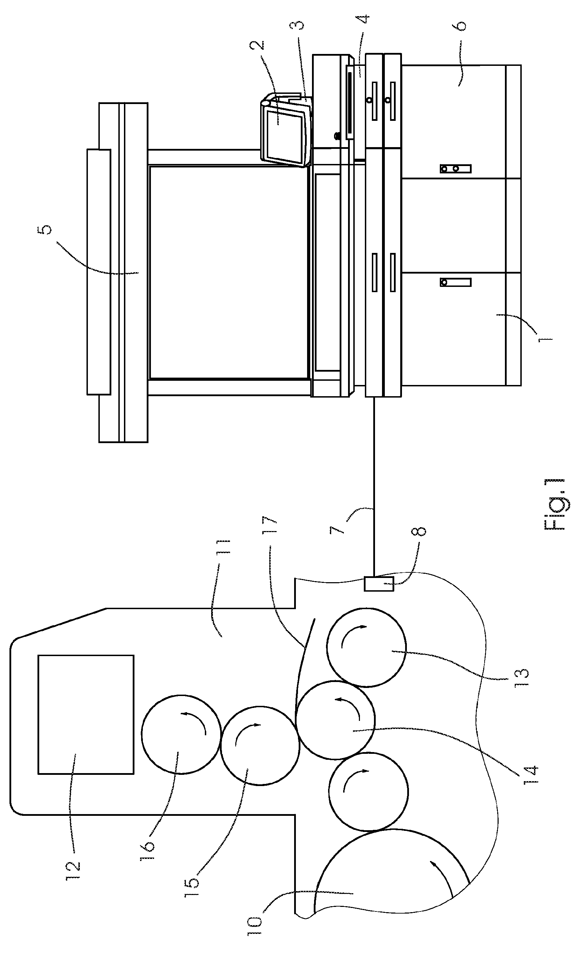

Gemäß der Ausführungsform in Figur 1 wird eine Druckmaschine 9 vom Bedienpersonal über einen Bedienungsbildschirm 2 an einem Steuerstand 1 bedient. Der Bedienungsbildschirm 2 ist ein LCD-Flachbildschirm mit integrierter Touch Screen Funktion, d. h. die Oberfläche des Bedienungsbildschirms 2 ist berührungssensitiv, so dass das Bedienpersonal Bedienbefehle und Eingaben von Parametern direkt auf der grafischen Benutzeroberfläche des Bedienungsbildschirms 2 eingeben kann. Die Anzeigen auf dem Bedienungsbildschirm und die Eingaben über die Benutzeroberfläche des Bedienungsbildschirms 2 werden an einen Bedienungsrechner 4 im Steuerstand 1 übertragen. Bei dem Bedienungsrechner 4 handelt es sich um einen handlungsüblichen PC mit einem Windows Betriebssystem. Der Steuerstand 1 der Druckmaschine 9 weist zudem einen Unterschrank 6 mit Ablagefächern auf, sowie eine Beleuchtungseinrichtung 5, welche den Steuerstand 1 ausleuchten kann. Der Bedienungsrechner 4 steht über eine Kommunikationsleitung 7 mit dem Druckmaschinenrechner 8 in Verbindung. Der Druckmaschinenrechner 8 steuert sämtliche Bewegungs- und Betriebsabläufe der Druckmaschine 9. Von der Druckmaschine 9 ist in Fig. 1 lediglich ein Ausschnitt zu sehen, der ein Druckwerk 11 darstellt. Grundsätzlich kann die Druckmaschine 9 aus einer beliebigen Anzahl von Druckwerken 11 bestehen. Bei dem Druckwerk 11 handelt es sich um ein Druckwerk einer Offsetbogendruckmaschine. Das Druckwerk 11 weist Transportzylinder 13 auf, welche einen bogenförmigen Bedruckstoff 17 durch das Druckwerk 11 hindurch transportieren. Bedruckt wird der Bogen 17 zwischen einem Gegendruckzylinder 14 und einem Gummituchzylinder 15. Im Anschluss an das Druckwerk 11 kann eine Wendetrommel 10 vorgesehen sein, mit deren Hilfe der Bogen 17 gewendet und somit im nächsten nicht abgebildeten Druckwerk auf der Rückseite im Schön- und Widerdruckbetrieb bedruckt werden kann. Die für den Druck notwendige Farbe wird im Farbwerk 12 bereitgestellt und dosiert auf einen Plattenzylinder 16 mit der Druckform übertragen. Vom Plattenzylinder 16 aus wird das Druckbild über den Gummituchzylinder 15 auf den Bedruckstoff 17 übertragen. Es ist auch möglich, dass der Bedienrechner 4 und Steuerungsrechner 8 der Druckmaschine 9 in einem gemeinsamen Rechner zusammengefasst sind. Ebenso kann insbesondere der Bedienrechner 4 zur Steuerung weiterer Maschinen verwendet werden, so dass von einem gemeinsamen Steuerstand 1 aus, mehrere hier nicht gezeigte Druckmaschinen oder andere Maschinen wie Falzmaschinen gesteuert werden können.

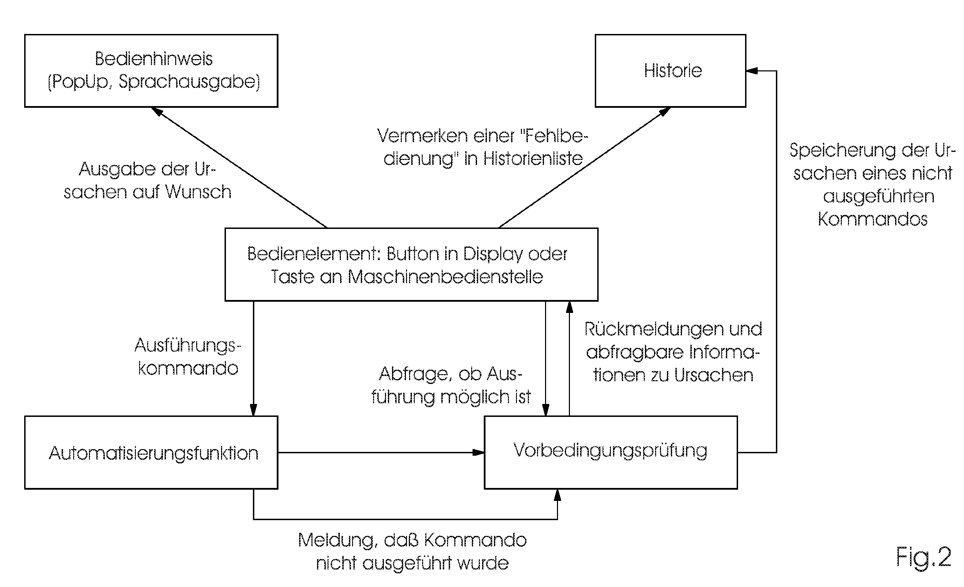

Der Druckbetrieb einer Bogenoffsetdruckmaschine 9 erfordert eine Vielzahl von Einstellungen. So muss insbesondere die Farbe im Farbwerk 12 präzise dosiert werden, damit das Druckbild schließlich den Anforderungen entspricht. Aber auch Registerverstellungen können erforderlich sein sowie weitere Einstellungen. Um dem Bedienpersonal die Bedienung der Druckmaschine 9 zu erleichtern, wird gemäß Fig. 2 die Möglichkeit geboten, vor, während oder nach der Durchführung von Bedienbefehlen zur Durchführung des Bedienbefehls notwendige Vorbedingungen anzuzeigen. Ausgehend von einem gewünschten Bedienkommando in Fig. 2 betätigt das Bedienpersonal ein entsprechendes Bedienelement auf dem Bedienungsbildschirm 2. Das durch das Bedienelement auf dem Bedienungsbildschirm 2 ausgelöste Ausführungskommando wird zunächst einer Vorbedingungsprüfung unterzogen. Wenn alle notwendigen Vorbedingungen erfüllt sind, wird das Bedienkommando ausgeführt und es kann eine Rückmeldung erfolgen, dass das Bedienkommando erfolgreich ausgeführt wurde. Diese Rückmeldung kann wiederum auf dem Bedienungsbildschirm 2 angezeigt werden. Sollte jedoch die Vorbedingungsprüfung nicht erfolgreich gewesen sein, so wird dem Bedienpersonal dies ebenfalls auf den Bedienungsbildschirm 2 mitgeteilt, und zusätzlich können dem Bedienpersonal auf dem Bedienungsbildschirm 2 alle nicht erfüllten Vorbedingungen angezeigt werden. Gleichzeitig ist es möglich, die nicht erfüllten Vorbedingungen im Zusammenhang mit dem gewünschten Ausführungskommando als Historie im Speicher des Bedienungsrechners 4 abzulegen. Auf diese Historie von nicht durchgeführten Bedienkommandos kann ebenfalls vom Bedienungsbildschirm 2 aus zugegriffen werden, um auf die Erfahrungen der Vergangenheit zurückgreifen zu können.

Neben der Speicherung von nicht ausgeführten Bedienkommandos und den fehlenden Vorbedingungen ist es selbstverständlich auch möglich, sämtliche Bedieneingaben ständig abzuspeichern. Neben der Ausgabe der nicht erfüllten Vorbedingungen auf dem Bedienungsbildschirm 2 können noch zusätzlich oder alternativ Sprachhinweise über einen Lautsprecher oder einen Kopfhörer an das Bedienpersonal ausgegeben werden. Weiterhin kann das Bedienpersonal bei der Beseitigung nicht erfüllter Vorbedingungen unterstützt werden, indem ihm Bedienhinweise in Form von Sprachausgabe oder auf dem Bedienungsbildschirm 2 erscheinenden so genannten "Popups" gegeben werden. Diese Bedienhinweise können z. B. eine Prioritätenliste enthalten, mit deren Hilfe das Bedienpersonal nach und nach mögliche Fehlerquellen abarbeitet, wobei die wahrscheinlichste Fehlerquelle zuerst angezeigt wird und die unwahrscheinlichste zuletzt. Gemäß Fig. 2 kann in dem Bedienungsrechner 4 weiterhin eine Automatisierungsfunktion implementiert sein, welche bei Eingabe eines Ausführungskommandos zunächst alle Vorbedingungen selbsttätig erfüllt, die vom Bedienungsrechner 4 im Zusammenhang mit dem Druckmaschinenrechner 8 erfüllt werden können. Falls dann dennoch Ausführungskommandos übrig bleiben sollten, für die ein oder mehrere Vorbedingungen nicht erfüllt werden können, so werden nur diese Ausführungskommandos und auch nicht automatisch erfüllbare Vorbedingungen dem Bedienpersonal angezeigt. Dies bedeutet, dass dem Bedienpersonal nur diejenigen nicht erfüllten Vorbedingungen angezeigt werden, bei denen ein manuelles Eingreifen des Bedienpersonals unerlässlich ist. Dies kann z. B. bei sicherheitsrelevanten Ausführungskommandos der Fall sein oder auch, wenn bestimmte Wartungseingriffe mit manueller Unterstützung des Bedienpersonals erforderlich sind.

Zur besseren Visualisierung von nicht durchführbaren Ausführungskommandos, können in Fig. 1 bestimmte Bedienelemente auf dem Bedienungsbildschirm 2 solange gesperrt sein, bis die notwendigen Vorbedingungen erfüllt sind. Eine solche Sperrung kann die Bedienung vollständig ausschließen, zusätzlich oder alternativ ist es aber auch möglich, dass Bedienelemente, zu deren Betätigung bestimmte Vorbedingungen noch zu erfüllen sind, farblich markiert sind. Dazu eignet sich insbesondere die Signalfarbe Rot. Sobald die Vorbedingungen zur Ausführung des mit dem entsprechenden Bedienelement zu betätigenden Ausführungskommandos erfüllt sind, wechselt das entsprechende Bedienelement auf dem Bedienungsbildschirm 2 seine Farbe und leuchtet dann z. B. grün auf. Somit wird dem Bedienpersonal auch optisch signalisiert, welche Bedienelemente derzeit zur Verfügung stehen und für welche Bedienelemente noch Vorbedingungen zu erfüllen sind.

Mit der erfindungsgemäßen Vorrichtung wird die Bedienung einer komplexen Druckmaschine 9 wesentlich erleichtert, da dem Bedienpersonal bei der Suche nach unerfüllten Vorbedingungen eine große Unterstützung zuteil wird. Aufgrund der Vielzahl von Einstellungen an einer Druckmaschine 9 kommt es sonst in der Praxis leicht vor, dass das Bedienpersonal eine bestimmte Eingabe oder Einstellung unterlässt und diese Fehler auf Grund der Vielzahl von Einstellungen und Eingaben nur für den sehr erfahrenen Nutzer aufzufinden sind. Die erfindungsgemäße Bedienunterstützung signalisiert dem Bedienpersonal stattdessen Schritt für Schritt, welche Vorbedingungen noch zu erfüllen sind, so dass auch weniger versiertes Bedienpersonal Schritt für Schritt die noch zu erledigenden Vorbedingungen abarbeiten kann.

### Bezugszeichenliste

- 1: Steuerstand einer Druckmaschine
- 2: Bedienungsbildschirm
- 3: Schwenkbare Lagerung
- 4: Bedienungsrechner
- 5: Beleuchtung
- 6: Unterschrank
- 7: Kommunikationsverbindung
- 8: Druckmaschinenrechner
- 9: Druckmaschine
- 10: Wendetrommel
- 11: Druckwerk
- 12: Farbwerk
- 13: Transportzylinder
- 14: Gegendruckzylinder
- 15: Gummituchzylinder
- 16: Plattenzylinder
- 17: Bogen

## Patentansprüche

1. Vorrichtung zur Bedienung von Bedruckstoff verarbeitenden Maschinen (9) mit wenigstens einem Steuerungsrechner (4, 8) und einem Bedienelement (2),
**dadurch gekennzeichnet,**
**dass** bei Eingabe von Bedienbefehlen über das Bedienelement (2) der Betriebszustand der Maschine (9) ermittelbar ist und dass der eingegebene Bedienbefehl in Abhängigkeit von Vorbedingungen ausgeführt wird, die vom Betriebszustand der Maschine (9) abhängen.

2. Vorrichtung nach Anspruch 1,
**dadurch gekennzeichnet,**
**dass** der Bedienbefehl nicht ausführbar ist, wenn die dazu notwendigen Vorbedingungen durch den Betriebszustand der Maschine (9) bedingt nicht gegeben sind, und dass die nicht erfolgte Durchführung des Bedienbefehls einer Bedienperson signalisierbar ist.

3. Vorrichtung nach Anspruch 1 oder 2,
**dadurch gekennzeichnet,**
**dass** bei Nichtausführung eines Bedienbefehls die nicht erfüllten Vorbedingungen dem Bedienpersonal übermittelbar sind.

4. Vorrichtung nach Anspruch 3,
**dadurch gekennzeichnet,**
**dass** die nicht erfüllten Vorbedingungen auf einer Bedienoberfläche (2) anzeigbar sind.

5. Vorrichtung nach Anspruch 3 oder 4,
**dadurch gekennzeichnet,**
**dass** die Übermittlung der nicht erfüllten Vorbedingungen wahlweise ein- oder ausschaltbar ist.

6. Vorrichtung nach einem der Ansprüche 3 bis 5,
**dadurch gekennzeichnet,**
**dass** die Ausgabe der nicht erfüllten Vorbedingungen als Sprachausgabe erfolgt.

7. Vorrichtung nach einem der vorhergehenden Ansprüche,
**dadurch gekennzeichnet,**
**dass** von einer Bedienperson über das Bedienelement (2) eingegebene Bedienbefehle vom Steuerungsrechner (4, 8) aufgezeichnet und in einer Datei abgespeichert werden.

8. Vorrichtung nach Anspruch 7,
**dadurch gekennzeichnet,**
**dass** neben der Aufzeichnung der Bedienbefehle bei fehlgeschlagenen Bedieneingaben die nicht erfüllten Vorbedingungen aufgezeichnet werden.

9. Vorrichtung nach einem der vorhergehenden Ansprüche,
**dadurch gekennzeichnet,**
**dass** bei fehlgeschlagenen Bedienbefehlen einer Bedienperson an Hand nicht erfüllter Vorbedingungen Hinweise zur Bedienunterstützung gegeben werden.

10. Vorrichtung nach einem der vorhergehenden Ansprüche,
**dadurch gekennzeichnet,**
**dass** mittels des Bedienelements (2) Bedienbefehle eingebbar sind und dass vor einer etwaigen Ausführung der Bedienbefehle zunächst zu erfüllende Vorbedingungen abfragbar und der Bedienperson übermittelbar sind.

11. Vorrichtung nach einem der vorhergehenden Ansprüche,
**dadurch gekennzeichnet,**
**dass** Bedienelemente (2), deren Eingaben durch nicht erfüllte Vorbedingungen nicht ausführbar sind, vor der Erfüllung der nötigen Vorbedingungen gesperrt sind.

12. Vorrichtung nach Anspruch 11,
**dadurch gekennzeichnet,**
**dass** die gesperrten Bedienelemente (2) durch eine Sperrfarbe markiert sind.

13. Vorrichtung nach einem der Ansprüche 11 oder 12,
**dadurch gekennzeichnet,**
**dass** bei Erfüllung der notwendigen Vorbedingungen das gesperrte Bedienelement (2) freigegeben wird.

14. Vorrichtung nach einem der Patentansprüche 1 bis 13,
**dadurch gekennzeichnet,**
**dass** zur Freigabe eines gesperrten Bedienelements (2) die farbliche Darstellung des zuvor gesperrten Bedienelements (2) verändert wird.

15. Vorrichtung nach einem der vorhergehenden Ansprüche,
**dadurch gekennzeichnet,**
**dass** die Bedienoberfläche (2) als Touch-Screen auf einem Computermonitor ausgeführt ist.

16. Druckmaschine (9) mit einer Vorrichtung nach einem der Patentansprüche 1 bis 15.
